# EUROPEAN PATENT APPLICATION

(11) **EP 4 235 424 A1**
(43) Date of publication of application: **30.08.2023**
(21) Application number: 22205217.7
(22) Date of filing: 03.11.2022
(51) Int. Cl.: G06F 9/50

(54) **RESOURCE CONTROL METHOD FOR FUNCTION COMPUTING, DEVICE, AND MEDIUM**

(30) Priority: 28.02.2022 CN 202210190323
(71) Applicant: Beijing Baidu Netcom Science Technology Co., Ltd., Beijing 100085 (CN)
(72) Inventor: SHI, Nansheng, BEIJING, 100085 (CN); LI, Zhe, BEIJING, 100085 (CN); CAO, Jiao, BEIJING, 100085 (CN)
(74) Representative: Deambrogi, Edgardo

(57) **Abstract**

Provided are a resource control method for function computing, a device, a medium, and a program product, which relate to the field of computers and, in particular, to cloud computing and deep learning. The specific implementation is: in response to determining that a current time is a period node of a first period, performing (S101, 202) resource control on a dynamic pool; and in response to determining that the current time is a period node of a second period, performing (S102, S203) resource control on a basic pool; where the dynamic pool and the basic pool are obtained by dividing function computing resources according to different change periods, the second period is longer than the first period, and the resource control includes capacity expansion or capacity reduction. The overall underlying resource utilization rate of the function computing platform can be improved.

## Description

### TECHNICAL FIELD

The present disclosure relates to the field of computers, in particular, to cloud computing and deep learning, and specifically, to a resource control method and apparatus for function computing, a device, a medium, and a program product.

### BACKGROUND

Function computing is a new cloud computing service model with flexibility from 0 to n, and the bottom layer of function computing requires the IaaS capability to provide enough compute resources for upper layer users.

In general, the function computing platform requests enough IaaS resources to satisfy its capability of dynamical capacity expansion and reduction, but when the underlying resources of the platform are insufficient, the request service stability of the function is seriously affected. This is because once IaaS resources of the current request are used, the function computing platform needs to re-request new compute resources to process a new request so that the whole process of resource request, resource initialization, function code download and preheating is very time-consuming and moreover, the performance of the whole service is seriously affected if resources are frequently requested and released. In addition, if the requested underlying resources are not used, an extra overhead is produced.

Therefore, how to improve the overall underlying resource utilization rate of the function computing platform is an urgent problem to be solved in the whole field of function computing.

### SUMMARY

The present disclosure provides a resource control method and apparatus for function computing, a device, a medium, and a program product.

According to an aspect of the present disclosure, a resource control method for function computing is provided. The method includes the steps below.

In response to determining that a current time is a period node of a first period, resource control is performed on a dynamic pool.

In response to determining that the current time is a period node of a second period, resource control is performed on a basic pool.

The dynamic pool and the basic pool are obtained by dividing function computing resources according to different change periods, the second period is longer than the first period, and the resource control includes capacity expansion or capacity reduction.

According to another aspect of the present disclosure, a resource control apparatus for function computing is provided. The apparatus includes a first control module and a second control module.

The first control module is configured to, in response to determining that a current time is a period node of a first period, perform resource control on a dynamic pool.

The second control module is configured to, in response to determining that the current time is a period node of a second period, perform resource control on a basic pool.

The dynamic pool and the basic pool are obtained by dividing function computing resources according to different change periods, the second period is longer than the first period, and the resource control includes capacity expansion or capacity reduction.

According to another aspect of the present disclosure, an electronic device is provided. The electronic device includes at least one processor and a memory communicatively connected to the at least one processor.

The memory is configured to store instructions executable by the at least one processor, where the instructions are executed by the at least one processor to enable the at least one processor to perform the resource control method for function computing provided by any embodiment of the present disclosure.

According to another aspect of the present disclosure, a non-transitory computer-readable storage medium is provided. The storage medium is configured to store computer instructions, where the computer instructions are used for enabling a computer to perform the resource control method for function computing provided by any embodiment of the present disclosure.

According to another aspect of the present disclosure, a computer program product is provided. The computer program product includes a computer program, where the computer program, when executed by a processor, enables the processor to implement the resource control method for function computing provided by any embodiment of the present disclosure.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure. In the drawings:
FIG. 1 is a flowchart of a resource control method for function computing according to an embodiment of the present disclosure;
FIG. 2A is a flowchart of a resource control method for function computing according to an embodiment of the present disclosure;
FIG. 2B is a schematic diagram of an overall framework for implementing the resource control method for function computing of an embodiment of the present disclosure;
FIG. 3A is a flowchart of a method for performing resource control on a dynamic pool according to an embodiment of the present disclosure;
FIG. 3B is a flowchart of another method for performing resource control on a dynamic pool according to an embodiment of the present disclosure;
FIG. 4A is a flowchart of a method for performing resource control on a basic pool according to an embodiment of the present disclosure;
FIG. 4B is a flowchart of another method for performing resource control on a basic pool according to an embodiment of the present disclosure;
FIG. 5 is a structural diagram of a resource control apparatus for function computing according to an embodiment of the present disclosure; and
FIG. 6 is a block diagram of an electronic device for implementing the resource control method for function computing of an embodiment of the present disclosure.

### DETAILED DESCRIPTION

Example embodiments of the present disclosure, including details of embodiments of the present disclosure, are described herein in conjunction with drawings to facilitate understanding. The example embodiments are illustrative only.

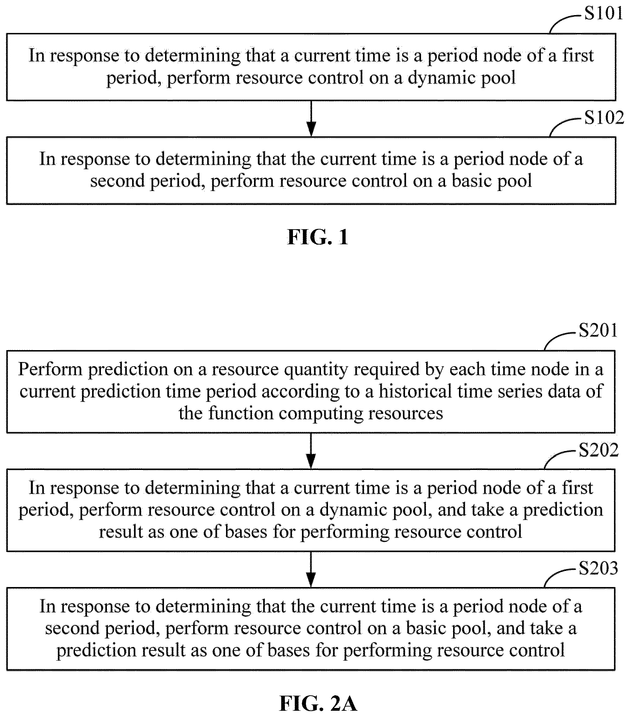

FIG. 1 is a flowchart of a resource control method for function computing according to an embodiment of the present disclosure. This embodiment is suitable for the case where underlying resources for function computing are controlled to improve the resource utilization rate, and relates to the field of computers and, in particular, to cloud computing and deep learning. The method can be performed by a resource control apparatus for function computing. The apparatus is implemented in software and/or hardware, and is preferably configured in an electronic device such as a computer device or a server. As shown in FIG. 1, the method specifically includes S101 and S102.

In S101, in response to determining that a current time is a period node of a first period, resource control is performed on a dynamic pool.

In S102, in response to determining that the current time is a period node of a second period, resource control is performed on a basic pool.

The dynamic pool and the basic pool are obtained by dividing function computing resources according to different change periods. The function computing resources are resources that a function computing platform has currently requested from the bottom layer for processing user requests. Since the number of user requests is dynamically changed and may be suddenly increased or decreased, the function computing platform is required to have a certain capacity of resource capacity expansion and reduction. Therefore, the resource control herein includes capacity expansion or capacity reduction on these resources.

Specifically, in this embodiment of the present disclosure, the second period is longer than the first period. For example, the first period may be at the minute level while the second period is at the hour level. That is, there is no difference between the resources divided in the dynamic pool and the resources divided the basic pool, and the difference is that the change period of the two resource pools is different. The basic pool changes according to a longer period, for example, the basic pool changes every few hours; the dynamic pool changes according to a shorter period, for example, the dynamic pool changes every few minutes. Therefore, capacity expansion and capacity reduction are not frequently performed on the basic pool because of the longer change period, and capacity expansion and capacity reduction are more frequently performed on the dynamic pool in a shorter time period. In one aspect, for the function computing resources as a whole, the stability of some resources (static resources) can be ensured in a long time period, thereby satisfying most user requests and improving the stability of the function computing service; in another aspect, the resources at the short period level in the dynamic pool are controlled to dynamically respond to the changing concurrent requests, thereby improving the utilization rate of resources.

It is to be further noted that in the related art, one solution is to keep a part of idle resources at a fixed value all the time and perform capacity expansion and capacity reduction on other resources dynamically according to the real-time changes of requests. However, in this solution, when the request peak value has not yet arrived, the part of resources managed in a normalized manner is considerably redundant, and the resource utilization rate is not high. In the solution of the present disclosure, the function computing resources are divided into the basic pool and the dynamic pool, and these two resource pools are changed based on different levels and periods of different lengths so that the resources in the basic pool are relatively stable while the resources in the dynamic pool can respond to changing concurrent requests through frequent changes. Meanwhile, capacity expansion and capacity reduction may be performed on the basic pool dynamically when a period node with a longer period arrives. As a result, the present disclosure can not only stably process most user requests, but also can respond to the sudden change of requests without affecting the resource utilization rate.

According to the solution of this embodiment of the present disclosure, the function computing resources are divided into two resource pools, where the basic pool changes according to a longer period and the dynamic pool changes according to a shorter period. Therefore, capacity expansion and capacity reduction are not frequently performed on the basic pool because of the longer change period, and capacity expansion and capacity reduction are more frequently performed on the dynamic pool in a shorter time period. In this manner, changing concurrent requests can be dynamically responded to while ensuring the stability of some resources, thereby improving the resource utilization rate and the stability of the function computing service.

In addition, in one embodiment, in order to keep more and most of the resources relatively stable and allow the function computing service to process most of the requests more stably, the resources in the basic pool may be more than the resources in the dynamic pool, thereby further improving the stability of the function computing service.

FIG. 2A is a flowchart of a resource control method for function computing according to an embodiment of the present disclosure. On the basis of the embodiments described above, in this embodiment, the performing of resource control is further optimized. As shown in FIG. 2A, the method specifically includes S201, S202 and S203.

In S201, prediction is performed on a resource quantity required by each time node in a current prediction time period according to a historical time series data of the function computing resources.

Specifically, Node-exporter, Prometheus (an open source system monitoring and alarm system) and the time series database (TSDB) may be pre-equipped in the underlying resources used for function computing. The Exporter is the general name of a collection of data acquisition components of Prometheus. The indexes of function computing resources are acquired in real time through Node-exporter and Prometheus and stored in the TSDB.

In addition, a time series prediction interface is also required to be equipped to analyze the historical resource usage, that is, to predict the future resource quantity according to the historical time series data. The prediction interface may be a certain machine learning model or a related prediction tool such as Prophet, an open source time series prediction tool of Facebook. The machine learning model may be determined through model training using training data composed of user requests and historical resource usage data based on the existing deep learning technology. Details are not repeated herein.

In S202, in response to determining that a current time is a period node of a first period, resource control is performed on a dynamic pool, and a prediction result is taken as one of the bases for performing resource control.

In S203, in response to determining that the current time is a period node of a second period, resource control is performed on a basic pool, and a prediction result is taken as one of the bases for performing resource control.

The prediction of the resource quantity refers to the prediction of the resource quantity required by each time node in the current prediction time period. The current prediction time period is a time period from a current time t to a time t+a or a time period from the current time t to a time t+p, where α is the first period, and p is the second period. The prediction result of the resource quantity is used as one of the bases for performing resource control on the dynamic pool or the basic pool. That is, the process of resource control on the dynamic pool according to the first period is achieved based on the prediction result of the resource quantity required by each time node in the time period from the current time t to the time t+a, and the process of resource control on the basic pool according to the second period is achieved based on the prediction result of the resource quantity required by each time node in the time period from the current time t to the time t+p. That is, in the solution of the present disclosure, the capacity expansion or capacity reduction and the resource quantity required for the capacity expansion or capacity reduction are determined according to the prediction of the resource usage quantity in a future time period. In this manner, the resources required in the future can be determined more accurately, and capacity expansion or capacity reduction can be performed reasonably, thereby improving the resource utilization rate.

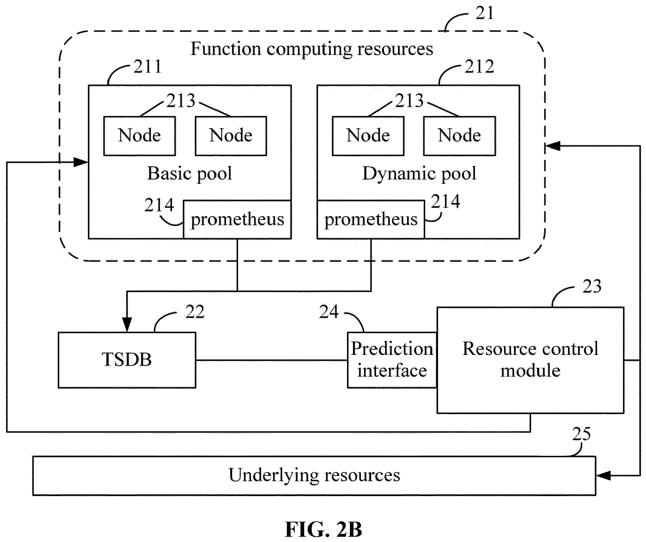

FIG. 2B is a schematic diagram of an overall framework for implementing the resource control method for function computing of an embodiment of the present disclosure. As shown in FIG. 2B, the function computing resources 21 are divided into the basic pool 211 and the dynamic pool 212. The Nodes 213 and the prometheus 214 in the basic pool 211 and the dynamic pool 212 are used for collecting and summarizing various indexes of the function computing resources in real time and storing the indexes in the time series database (TSDB) 22. The prediction interface 24 is used for predicting the quantity of resources required in the future according to the historical time series data in the TSDB 22 so that the resource control module 23 takes the prediction result as one of the bases for performing resource control on the basic pool 211 and the dynamic pool 212. The resource control includes capacity expansion or capacity reduction. Resources to be expanded are requested from the underlying resources 25 and put into the basic pool 211 or the dynamic pool 212, and resources to be released are released back to the underlying resource 25 from the basic pool 211 or the dynamic pool 212.

In the solution of this embodiment of the present disclosure, the function computing resources are divided into the basic pool which changes according to a longer period and the dynamic pool which changes according to a shorter period, and resource control is performed on the basic pool and the dynamic pool based on the prediction result of the resources required in the future time period. Therefore, capacity expansion and capacity reduction are not frequently performed on the basic pool because of the longer change period, and capacity expansion and capacity reduction are more frequently performed on the dynamic pool in a shorter time period. In this manner, changing concurrent requests can be dynamically responded to while ensuring the stability of some resources, thereby improving the resource utilization rate and the stability of the function computing service. Meanwhile, the resources required in the future can be determined more accurately through prediction, and capacity expansion or capacity reduction can be performed reasonably, thereby improving the resource utilization rate.

In addition, in one embodiment, if the quantity of current requests exceeds the prediction result and the exceeded part satisfies a preset condition, that is, the quantity of current requests exceeds the prediction result, at this point, the current function computing resources may not be enough, and in this manner, the current requests are intelligently scheduled in the following manner.

Synchronization requests in the current requests are preferentially executed, and asynchronization requests in the current requests are put into a delay processing queue.

If current function computing resources cannot satisfy the synchronization requests, the synchronization requests are sequentially put into a synchronization queue according to a sequence of receiving the synchronization requests.

After the execution of the synchronization requests in the synchronization queue is completed, the asynchronization requests in the delay processing queue are executed.

That is, the requests are responded and scheduled according to the processing order of processing synchronous requests first and then asynchronous requests so that the average waiting time of users is minimized, thereby effectively improving the reliability and execution efficiency of the whole service and ensuring that all requests can be processed finally.

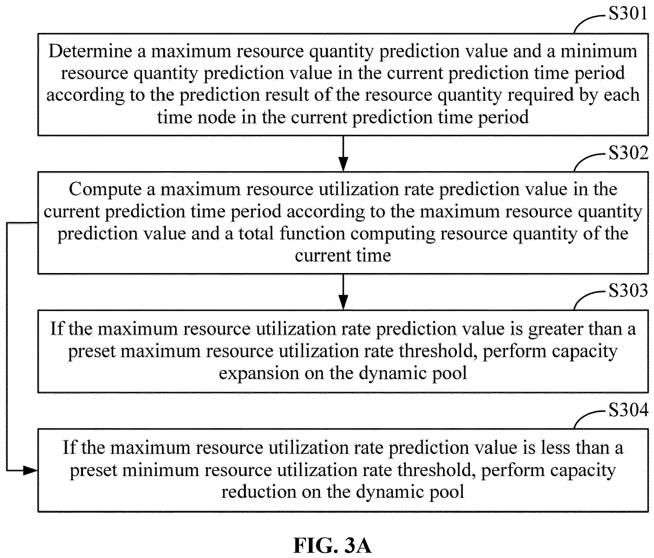

FIG. 3A is a flowchart of a method for performing resource control on a dynamic pool according to an embodiment of the present disclosure. On the basis of the embodiments described above, in this embodiment, the performing of resource control on the dynamic source pool in a case where the current prediction time period is the time period from the current time t to the time t+a is further optimized. As shown in FIG. 3A, the performing of resource control on the dynamic source pool specifically includes S301, S302, S303 and S304.

In S301, a maximum resource quantity prediction value and a minimum resource quantity prediction value in the current prediction time period are determined according to the prediction result of the resource quantity required by each time node in the current prediction time period.

The dynamic pool changes according to a shorter cycle, for example, the dynamic pool changes at the minute level. Therefore, the prediction may be performed on the resource quantity required by each minute in the time period (t, t+α], and then the maximum prediction result and the minimum prediction result are selected as the maximum resource quantity prediction value and the minimum resource quantity prediction value in the current prediction time period.

In S302, a maximum resource utilization rate prediction value in the current prediction time period is computed according to the maximum resource quantity prediction value and a total function computing resource quantity of the current time.

The ratio of the maximum resource quantity prediction value to the total function computing resource quantity of the current time is computed, and the computed result is taken as the maximum resource utilization rate prediction value in the current prediction time period.

In S303, if the maximum resource utilization rate prediction value is greater than a preset maximum resource utilization rate threshold, capacity expansion is performed on the dynamic pool.

In S304, if the maximum resource utilization rate prediction value is less than a preset minimum resource utilization rate threshold, capacity reduction is performed on the dynamic pool.

The maximum resource utilization rate threshold and the minimum resource utilization rate threshold may be preset according to the actual situation and are not limited to the embodiment of the present disclosure.

The maximum resource utilization rate threshold and the minimum resource utilization rate threshold may be used for calibrating the reasonable range of the resource utilization rate. In S303, according to the prediction result, if the maximum resource utilization rate prediction value is greater than the preset maximum resource utilization rate threshold, it means that a request peak value may occur in the future, and the resource utilization rate at that time exceeds the maximum resource utilization rate threshold, causing resources insufficiency, so capacity expansion is required to be pre-performed. In S304, according to the prediction result, if the maximum resource utilization rate prediction value is less than the preset minimum resource utilization rate threshold, it means that even if a request peak value may occur in the future, the resource utilization rate at that time is very low and has been lower than the minimum resource utilization rate threshold, causing resource redundancy, so capacity reduction is required to be pre-performed.

Therefore, in this embodiment of the present disclosure, the resource control is performed according to the prediction of the resource usage quantity in a further time period and the current actual resource quantity so that the future required resources can be determined more accurately and capacity expansion and capacity reduction can be performed in time, thereby achieving the resource dynamic adjustment. Meanwhile, the future resource utilization rate can also be controlled in a more reasonable range, thereby improving the resource utilization rate. In addition, since the resources are dynamically controlled according to the period in this embodiment of the present disclosure, even if the current capacity is expanded overly, the resources may be recovered and released through capacity reduction in the next period, thereby effectively reducing the occurrence of resource waste.

In one embodiment, the capacity expansion may specifically be performed on the dynamic source pool in the following manner.

An underlying resource request interface is called to acquire the quantity of resources required for capacity expansion, and the required quantity of resources is added to the dynamic pool, where the quantity required for capacity expansion is obtained by subtracting the total function computing resource quantity of the current time from a ratio of the maximum resource quantity prediction value to the minimum resource utilization rate threshold.

The underlying resources, for example, may be the platform as a service (PAAS), and resources may be requested from the PAAS by calling the underlying resource request interface. The purpose of computing the quantity required for capacity expansion according to the manner described above is that the overall resource utilization rate of the expanded resources may be kept at the minimum resource utilization rate threshold when the request peak value arrives so that sufficient resources may be ensured to satisfy the processing requirements when the request peak value arrives in the future, thereby improving the service stability.

In one embodiment, the capacity reduction may specifically be performed on the dynamic source pool in the following manner.

A ratio of the maximum resource quantity prediction value to the maximum resource utilization rate threshold is computed, and the total function computing resource quantity of the current time is subtracted from the ratio to obtain a first target quantity of resources to be released for capacity reduction.

Resources are released from the dynamic pool according to a preset priority and a current state of each resource in the dynamic pool until a quantity of released resources reaches the first target quantity or until the dynamic pool is emptied, where the preset priority of each resource is a resource release order determined according to the current state of each resource.

The ratio of the maximum resource quantity prediction value to the maximum resource utilization rate threshold is required to be computed first, and the total function computing resource quantity of the current time is subtracted from the ratio to obtain the first target quantity of resources to be released for capacity reduction. That is, after the first target quantity of resources is released, when the quantity of resources required in the future reaches the maximum resource quantity prediction value, the resource utilization rate at this point reaches the maximum resource utilization rate threshold so that the resources can be fully utilized. Then, the resources are released from the dynamic pool according to the preset priority and the current state of each resource in the dynamic pool, thereby further improving the resource utilization rate.

The state, for example, may include a first state, a second state, a third state and a fourth state.

The first state is used for indicating that a resource in the first state is executing a task and enters the third state after the task is completed.

The second state is used for indicating that a resource in the second state is in an idle state and is allowed to be reused by a specified function.

The third state is used for indicating an idle but nonreusable state and that a resource in the third state enters the first state when the resource in the third state executes a task.

The fourth state is used for indicating that a resource in the fourth state is locked to executing a task but automatically released after the task is completed.

In the process of resource control, the state of each resource may be labeled, and the current state of each resource may be determined according to the state label. On the basis of the above, resources in the dynamic pool with priorities in a descending order may be: resources in the third state, resources in the second state, and resources in the first state. That is, the resources in the third state are preferentially released, if the first target quantity is not reached after the release of the resources in the third state is completed, resources in the second state are selected to release, if the first target quantity is not reached after the release of the resources in the second state is completed, resources in the first state are selected to release until the total quantity of released resources reaches the first target quantity or the dynamic pool is emptied, and then no further resource is released.

It is to be noted that, for the release of resources, since the first state indicates that a task is being executed, the release of the resources in the first state cannot affect the task that the resource is currently executing. Therefore, the release of the resources in the first state specifically means that the resource is labelled as the fourth state and is automatically released after the resource completes the current task. In addition, the resources in the second state and the resources in the third state may be released according to a "last access but first release" rule. That is, since both the second state and the third state indicate that the resource is idle and the only difference is that the second state indicates that the resource is idle and is allowed to be reused by a specified function, according to the order of idle time from short to long, resources that have just been idle are preferentially released, because the resources that have been idle for a time period may possibly be reused immediately and enter the second state or directly enter the first state, and if these resources that have been idle for a time period are preferentially released first, the waiting time of these resources when they are idle is wasted, resulting in the reduction of the resource utilization rate.

As described above, in this embodiment of the present disclosure, capacity reduction is performed on the dynamic pool using a state release algorithm, and the release order is determined according to the current different states of the resources, thereby achieving the directional recovery of redundant resources. Since the labelled state indicates the state of the task currently executed by the resource, resources may be released according to the usage of the current resource. In one aspect, the current idle resources are released first, and then the resources that are executing tasks are released, thereby ensuring the service stability; in another aspect, in the idle resources, based on whether resources are allowed to be reused, nonreusable resources are released first, and then the resources that can be reused by the specified function are released, thereby improving the resource reuse rate. Meanwhile, through the resource reuse in the directional recovery process, the occurrence of cold start can be reduced and the task processing efficiency can be improved.

Further, in one embodiment, the resources in the third state or the resources in the second state are stored in a form of an idle resource queue and a reusable resource queue, respectively, and a key value index of each resource in the third state and a key value index of each resource in the second state are stored for indicating the location of each resource in the queue; the resources in the first state and the resources in the fourth state are stored in a form of a collection. The purpose of such a setting is that since the time complexity of traversing the queues is O(N) and the locations of resources in the queue are recorded through the key value indexes in this embodiment of the present disclosure, the acquisition, use and directional recovery of resources can be achieved with the time complexity of O(1), thereby improving the processing efficiency.

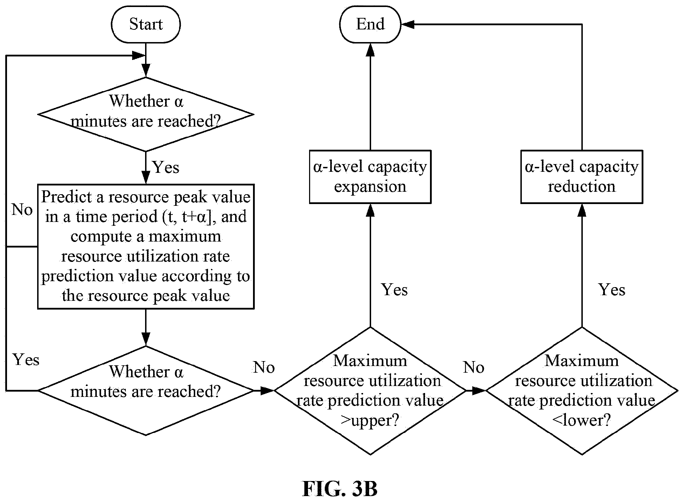

FIG. 3B is a flowchart of another method for performing resource control on a dynamic pool according to an embodiment of the present disclosure. As shown in FIG. 3B, for example, when the first period is at the minute level and the period node is α, the specific resource control flow is as follows. Whether the period node of the first period has been reached currently is determined, that is, whether α minutes from the previous period node have been reached is determined. If it is determined that the period node of the first period has not been reached currently, continue to wait and return to determine whether the period node of the first period has been reached again. If it is determined that the period node of the first period has been reached currently, a resource peak value in a time period (t, t+α] is predicted, and the maximum resource utilization rate prediction value is computed according to the resource peak value. Then, whether the maximum resource utilization rate prediction value is in a range composed of the maximum resource utilization rate threshold upper and the minimum resource utilization rate threshold lower is determined. If the maximum resource utilization rate prediction value is in the range, capacity expansion and capacity reduction are not performed on the resources. If the maximum resource utilization rate prediction value is not in the range, capacity expansion and capacity reduction need to be performed on the resources. Specifically, whether the maximum resource utilization rate prediction value is greater than the maximum resource utilization rate threshold upper is determined first. If the maximum resource utilization rate prediction value is greater than the maximum resource utilization rate threshold upper, a-level capacity expansion is performed. If the maximum resource utilization rate prediction value is not greater than the maximum resource utilization rate threshold upper, whether the maximum resource utilization rate prediction value is less than the minimum resource utilization rate threshold lower is determined, and if the maximum resource utilization rate prediction value is less than the minimum resource utilization rate threshold lower, a-level capacity reduction is performed. Therefore, capacity expansion or capacity reduction is performed on the dynamic pool at a period of α minutes to dynamically perform resource control on the dynamic pool.

According to the solution of this embodiment of the present disclosure, the function computing resources are divided into two resource pools, where the basic pool changes according to a longer period and the dynamic pool changes according to a shorter period. Therefore, changing concurrent requests can be dynamically responded to while ensuring the stability of some resources, thereby improving the resource utilization rate and the stability of the function computing service. Meanwhile, whether capacity expansion or capacity reduction is required and the quantity of resources for capacity expansion or capacity reduction are determined according to the prediction of the resource usage quantity in a future time period and the current actual resource quantity as well as the preset threshold resource utilization rate range so that resources required in the future are determined more accurately, capacity expansion and capacity reduction can be reasonably performed, and the future resource utilization rate can be controlled in a more reasonable range, thereby improving the resource utilization rate. In addition, the order of releasing resources is determined according to different current states of resources using the state release algorithm, so as to achieve the directional recovery of redundant resources, thereby improving the resource reuse rate. Meanwhile, through the resource reuse in the directional recovery process, the occurrence of cold start can be reduced and the task processing efficiency can be improved.

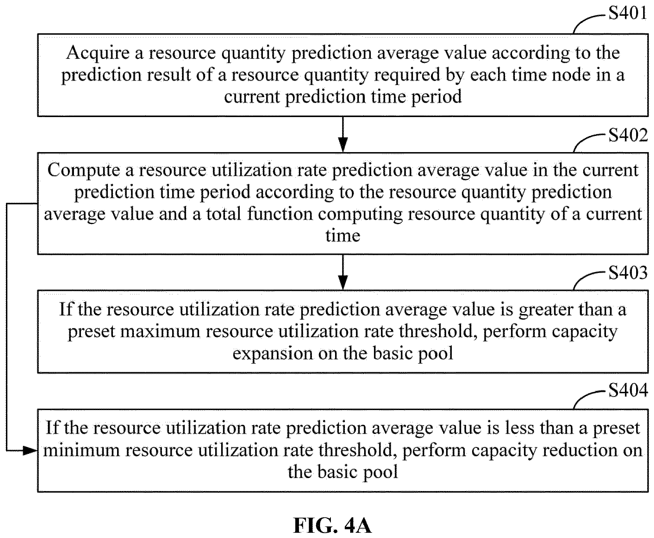

FIG. 4A is a flowchart of a method for performing resource control on a basic pool according to an embodiment of the present disclosure. On the basis of the embodiments described above, in this embodiment, the performing of resource control on the static source pool in a case where the current prediction time period is the time period from the current time t to the time t+p is further optimized. As shown in FIG. 4A, the performing of resource control on the static source pool specifically includes S401, S402, S403 and S404.

In S401, a resource quantity prediction average value is acquired according to the prediction result of a resource quantity required by each time node in a current prediction time period.

The basic pool changes according to a longer cycle, for example, the basic pool changes at the hour level. Therefore, the prediction may be performed on the resource quantity required by each hour in the time period (t, t+p), and then the resource quantity prediction average value is computed.

In S402, a resource utilization rate prediction average value in the current prediction time period is computed according to the resource quantity prediction average value and a total function computing resource quantity of a current time.

The ratio of the resource quantity prediction average value to the total function computing resource quantity of the current time is computed, and the computed result is taken as the resource utilization rate prediction average value in the current prediction time period.

In S403, if the resource utilization rate prediction average value is greater than a preset maximum resource utilization rate threshold, capacity expansion is performed on the basic pool.

In S404, if the resource utilization rate prediction average value is less than a preset minimum resource utilization rate threshold, capacity reduction is performed on the basic pool.

The maximum resource utilization rate threshold and the minimum resource utilization rate threshold may be preset according to the actual situation and are not limited to the embodiment of the present disclosure.

In one embodiment, the capacity expansion may specifically be performed on the static source pool in the following manner.

The ratio of the resource quantity prediction average value to the minimum resource utilization rate threshold is computed, and the total function computing resource quantity of the current time is subtracted from the ratio to obtain a second target quantity of resources required for capacity expansion.

If the total quantity of resources in the dynamic pool is greater than the second target quantity, the second target quantity of resources is acquired from the dynamic pool and migrated into the basic pool.

If the total quantity of resources in the dynamic pool is less than the second target quantity, all resources in the dynamic pool are migrated into the basic pool, an underlying resource request interface is called to acquire new resources, and the new resources are put into the basic pool until the quantity of migrated and put resources reaches the second target quantity.

As can be seen from the above, through the comparison between the process of capacity expansion on the basic pool and the process of capacity expansion on the dynamic pool, the difference between them lies in that, in one aspect, the second target quantity of resources required for capacity expansion is computed according to the resource quantity prediction average value, and in another aspect, the capacity expansion on the basic pool is not performed by directly calling the underlying resource request interface to request new resources but by migrating resources to the basic pool. Specifically, if the total quantity of resources in the dynamic pool is greater than the second target quantity, the second target quantity of resources is directly acquired from the dynamic pool and migrated into the basic pool, and if the total quantity of resources in the dynamic pool is less than the second target quantity, all resources in the dynamic pool are migrated into the basic pool, the underlying resource request interface is called to acquire new resources, and the new resources are put into the basic pool until the quantity of migrated and put resources reaches the second target quantity.

Instead of requesting new resources directly from the bottom layer into the basic pool, the resources are migrated into the basic pool, that is, more active resources (resources in the dynamic pool) are migrated into the more stable basic pool. In one aspect, since the whole process of resource request, resource initialization, function code download and preheating is very time-consuming, in this embodiment of the present disclosure, the time-consuming problem caused by the request of resources from the bottom layer can be avoided; in another aspect, the resources can be ensured to remain constant in the future time period p, and the service stability can be improved. On the basis of the above, since the dynamic pool changes according to a shorter period, even if the resources in the dynamic pool are emptied, the next period comes soon, capacity expansion is performed on the dynamic pool in time, and the dynamic pool is not affected by the resource migration, thereby improving the resource utilization rate as a whole.

In one embodiment, the capacity reduction may specifically be performed on the static source pool in the following manner.

A ratio of the resource quantity prediction average value to the maximum resource utilization rate threshold is computed, and the total function computing resource quantity of the current time is subtracted from the ratio to obtain a third target quantity of resources to be released for capacity reduction.

If the total quantity of resources in the dynamic pool is greater than the third target quantity, the third target quantity of resources is released from the dynamic pool.

If the total quantity of resources in the dynamic pool is less than the third target quantity, resources in the dynamic pool are emptied, and resources are released from the basic pool until the quantity of emptied and released resources reaches the third target quantity.

Therefore, in the process of capacity reduction on the basic pool, the resources are preferentially released from the dynamic pool, and the purpose of the above operation is similar to the purpose of the resource migration in the process of capacity reduction on the basic pool and is to preferentially process the relatively active resources on the basis that the overall resource utilization rate requirement is satisfied, thereby ensuring that there are enough stable resources in the basic pool and improving the service stability.

In addition, in the resource control on the basic pool, the process of resource migration and resource release from the dynamic pool is also performed based on the state labels of resources according to the state label algorithm described in the above embodiments, that is, the resource migration or resource release is performed according to the preset priority and the current state of each resource in the dynamic pool. The contents related to the state and priority of the resource are the same as those described in the above embodiments, and details are not repeated herein.

Finally, it is to be noted that if a time at which any target resource completes the execution of the task has not reached a period node of the first period or a period node of the second period, the state of the target resource is labelled as the second state, that is, the target resource is idle and is allowed to be reused by the specified function. Therefore, although the period node for dynamically controlling the resource has not been reached at this point, since the target resource has completed the task, the target resource is labelled as the second state, thereby improving the resource reuse rate.

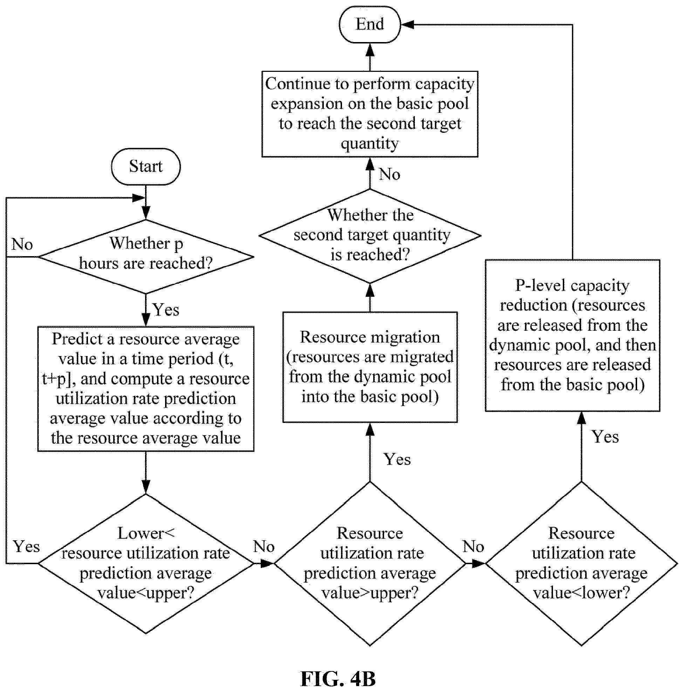

FIG. 4B is a flowchart of another method for performing resource control on a basic pool according to an embodiment of the present disclosure. As shown in FIG. 4B, for example, when the second period is at the hour level and the period node is p, the specific resource control flow is as follows. Whether the period node of the second period has been reached currently is determined, that is, whether p hours from the previous period node have been reached is determined. If it is determined that the period node of the second period has not been reached currently, continue to wait and return to determine whether the period node of the second period has been reached again. If it is determined that the period node of the second period has been reached currently, a resource average value in a time period (t, t+p] is predicted, and the resource utilization rate prediction average value is computed according to the resource average value. Then, whether the resource utilization rate prediction average value is in a range composed of the maximum resource utilization rate threshold upper and the minimum resource utilization rate threshold lower is determined. If the resource utilization rate prediction average value is in the range, capacity expansion and capacity reduction are not performed on the resources. If the resource utilization rate prediction average value is not in the range, capacity expansion and capacity reduction need to be performed on the resources. Specifically, whether the resource utilization rate prediction average value is greater than the maximum resource utilization rate threshold upper is determined first. If the resource utilization rate prediction average value is greater than the maximum resource utilization rate threshold upper, resource migration is performed (resources are migrated from the dynamic pool into the basic pool). If the quantity of migrated resources after the dynamic pool is emptied has not reached the second target quantity, capacity expansion is continued to be performed on the basic pool using underlying resources to reach the second target quantity. If the resource utilization rate prediction average value is not greater than the maximum resource utilization rate threshold upper, whether the resource utilization rate prediction average value is less than the minimum resource utilization rate threshold lower is determined, and if the resource utilization rate prediction average value is less than the minimum resource utilization rate threshold lower, p-level capacity reduction is performed (resources are released from the dynamic pool, and then resources are released from the basic pool). Therefore, capacity expansion or capacity reduction is performed on the basic pool at a period of p minutes to dynamically perform resource control on the basic pool.

According to the solution of this embodiment of the present disclosure, the function computing resources are divided into two resource pools, where the basic pool changes according to a longer period and the dynamic pool changes according to a shorter period. Therefore, changing concurrent requests can be dynamically responded to while ensuring the stability of some resources, thereby improving the resource utilization rate and the stability of the function computing service. Meanwhile, whether capacity expansion or capacity reduction is required and the quantity of resources for capacity expansion or capacity reduction are determined according to the prediction of the resource usage quantity in a future time period and the current actual resource quantity as well as the preset threshold resource utilization rate range so that resources required in the future are determined more accurately, capacity expansion and capacity reduction can be reasonably performed, and the future resource utilization rate can be controlled in a more reasonable range, thereby improving the resource utilization rate. In addition, capacity expansion or capacity reduction is performed on the basic pool through resource migration, and the relatively active resources are preferentially processed on the basis that the overall resource utilization rate requirement is satisfied, thereby ensuring that there are enough stable resources in the basic pool and further improving the service stability while ensuring the resource utilization rate.

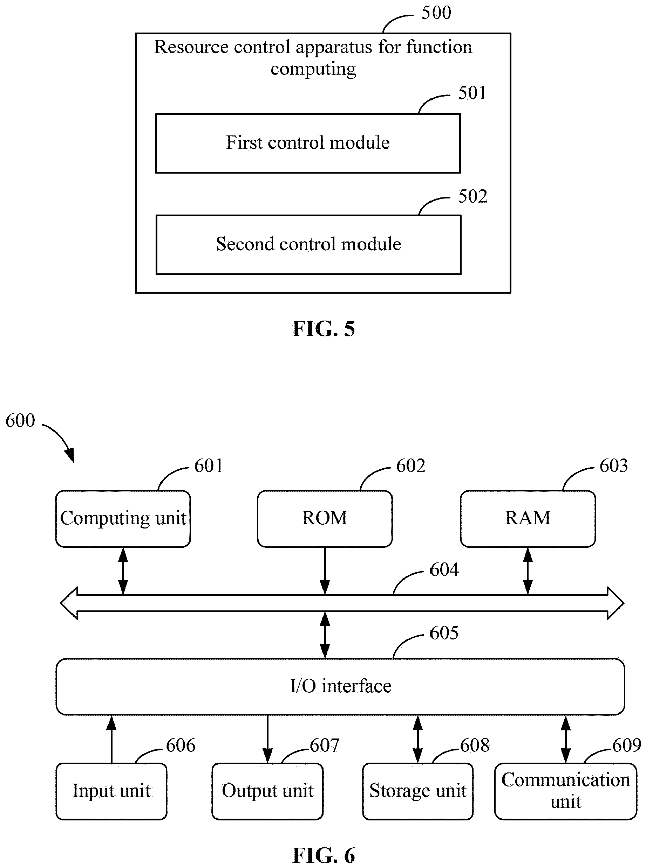

FIG. 5 is a structural diagram of a resource control apparatus for function computing according to an embodiment of the present disclosure. This embodiment is suitable for the case where underlying resources for function computing are controlled to improve the resource utilization rate, and relates to the field of computers and, in particular, to cloud computing and deep learning. The apparatus can implement the resource control method for function computing provided by any embodiment of the present disclosure. As shown in FIG. 5, the apparatus 500 specifically includes a first control module 501 and a second control module 502.

The first control module 501 is configured to, in response to determining that a current time is a period node of a first period, perform resource control on a dynamic pool.

The second control module 502 is configured to, in response to determining that the current time is a period node of a second period, perform resource control on a basic pool.

The dynamic pool and the basic pool are obtained by dividing function computing resources according to different change periods, the second period is longer than the first period, and the resource control includes capacity expansion or capacity reduction.

Optionally, resources in the basic pool are more than resources in the dynamic pool.

Optionally, the apparatus further includes a prediction module.

The prediction module is specifically configured to perform prediction on a resource quantity required by each time node in a current prediction time period according to a historical time series data of the function computing resources, and take a prediction result as one of the bases for performing resource control on the dynamic pool or the basic pool.

The current prediction time period is a time period from a current time t to a time t+a or a time period from the current time t to a time t+p, where α is the first period, and p is the second period.

Optionally, the current prediction time period is the time period from the current time t to the time t+α, and accordingly, the first control module 501 includes a resource quantity prediction peak value computing unit, a maximum resource utilization rate prediction value computing unit, a dynamic pool capacity expansion unit and a dynamic pool capacity reduction unit.

The resource quantity prediction peak value computing unit is configured to determine a maximum resource quantity prediction value and a minimum resource quantity prediction value in the current prediction time period according to the prediction result of the resource quantity required by each time node in the current prediction time period.

The maximum resource utilization rate prediction value computing unit is configured to compute a maximum resource utilization rate prediction value in the current prediction time period according to the maximum resource quantity prediction value and a total function computing resource quantity of the current time.

The dynamic pool capacity expansion unit is configured to, if the maximum resource utilization rate prediction value is greater than a preset maximum resource utilization rate threshold, perform capacity expansion on the dynamic pool.

The dynamic pool capacity reduction unit is configured to, if the maximum resource utilization rate prediction value is less than a preset minimum resource utilization rate threshold, perform capacity reduction on the dynamic pool.

Optionally, the dynamic pool capacity expansion unit is specifically configured to perform the following operation.

An underlying resource request interface is called to acquire the quantity of resources required for capacity expansion, and the required quantity of resources is added to the dynamic pool.

The quantity required for capacity expansion is obtained by subtracting the total function computing resource quantity of the current time from a ratio of the maximum resource quantity prediction value to the minimum resource utilization rate threshold.

Optionally, the dynamic pool capacity reduction unit is specifically configured to perform the following operations. A ratio of the maximum resource quantity prediction value to the maximum resource utilization rate threshold is computed, and the total function computing resource quantity of the current time is subtracted from the ratio to obtain a first target quantity of resources to be released for capacity reduction. Resources are released from the dynamic pool according to a preset priority and a current state of each resource in the dynamic pool until a quantity of released resources reaches the first target quantity or until the dynamic pool is emptied.

The preset priority of each resource is a resource release order determined according to the current state of each resource.

Optionally, the state includes a first state, a second state, a third state and a fourth state.

The first state is used for indicating that a resource in the first state is executing a task and enters the third state after the task is completed.

The second state is used for indicating that a resource in the second state is in an idle state and is allowed to be reused by a specified function.

The third state is used for indicating that a resource in the third state is in an idle but nonreusable state and enters the first state when the resource in the third state executes a task.

The fourth state is used for indicating that a resource in the fourth state is locked to execute a task but automatically released after the task is completed.

Optionally, resources in the dynamic pool with priorities in a descending order are: resources in the third state, resources in the second state and resources in the first state.

Optionally, the current prediction time period is the time period from the current time t to the time t+p, and accordingly, the second control module 502 includes a resource quantity prediction average value computing unit, a resource utilization rate prediction average value computing unit, a basic pool capacity expansion unit and a basic pool capacity reduction unit.

The resource quantity prediction average value computing unit is configured to acquire a resource quantity prediction average value according to the prediction result of the resource quantity required by each time node in the current prediction time period.

The resource utilization rate prediction average value computing unit is configured to compute a resource utilization rate prediction average value in the current prediction time period according to the resource quantity prediction average value and the total function computing resource quantity of the current time.

The basic pool capacity expansion unit is configured to, if the resource utilization rate prediction average value is greater than the preset maximum resource utilization rate threshold, perform capacity reduction on the basic pool.

The basic pool capacity reduction unit is configured to, if the resource utilization rate prediction average value is less than the preset minimum resource utilization rate threshold, perform capacity reduction on the basic pool.

Optionally, the basic pool capacity expansion unit is specifically configured to perform the following operations.

A ratio of the resource quantity prediction average value to the minimum resource utilization rate threshold is computed, and the total function computing resource quantity of the current time is subtracted from the ratio to obtain a second target quantity of resources required for capacity expansion.

If the total quantity of resources in the dynamic pool is greater than the second target quantity, the second target quantity of resources is acquired from the dynamic pool, and the second target quantity of resources is migrated into the basic pool.

If the total quantity of resources in the dynamic pool is less than the second target quantity, all resources in the dynamic pool are migrated into the basic pool, the underlying resource request interface is called to acquire new resources, and the new resources are put into the basic pool until the quantity of migrated and put resources reaches the second target quantity.

Optionally, the basic pool capacity reduction unit is specifically configured to perform the following operations.

A ratio of the resource quantity prediction average value to the maximum resource utilization rate threshold is computed, and the total function computing resource quantity of the current time is subtracted from the ratio to obtain a third target quantity of resources to be released for capacity reduction.

If the total quantity of resources in the dynamic pool is greater than the third target quantity, the third target quantity of resources is released from the dynamic pool.

If the total quantity of resources in the dynamic pool is less than the third target quantity, resources in the dynamic pool are emptied, and resources are released from the basic pool until the quantity of emptied and released resources reaches the third target quantity.

Optionally, the apparatus further includes a labelling module.

The labelling module is configured to, if a time at which any target resource completes the execution of a task has not reached a period node of the first period or a period node the second period, label a state of the target resource as the second state.

Optionally, the resources in the third state or the resources in the second state are stored in a form of an idle resource queue and a reusable resource queue, respectively, and a key value index of each resource in the third state and a key value index of each resource in the second state are stored for indicating a location of each resource in the queue; the resources in the first state and the resources in the fourth state are stored in a form of a collection.

Optionally, the apparatus further includes an intelligent scheduling module. The intelligent scheduling module is configured to, in response to determining that the quantity of current requests exceeds the prediction result and an excess part satisfies a preset condition, schedule the current requests in the following manner.

Synchronization requests in the current requests are preferentially executed, and asynchronization requests in the current requests are put into a delay processing queue.

If current function computing resources cannot satisfy the synchronization requests, the synchronization requests are sequentially put into a synchronization queue according to a sequence of receiving the synchronization requests.

After the execution of the synchronization requests in the synchronization queue is completed, the asynchronization requests in the delay processing queue are executed.

The preceding product may perform the method provided by any embodiment of the present disclosure and has functional modules and beneficial effects corresponding to the performed method.

In the solutions of the present disclosure, the collection, storage, use, processing, transmission, provision, and disclosure of user personal information involved are in compliance with provisions of relevant laws and regulations and do not violate public order and good customs.

According to an embodiment of the present disclosure, the present disclosure further provides an electronic device, a readable storage medium and a computer program product.

FIG. 6 is a block diagram of an example electronic device 600 that may be used for implementing embodiments of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device, or a similar computing apparatus. Herein the shown components, the connections and relationships between these components, and the functions of these components are illustrative only and are not intended to limit the implementation of the present disclosure as described and/or claimed herein.

As shown in FIG. 6, the device 600 includes a computing unit 601. The computing unit 601 may perform various appropriate actions and processing according to a computer program stored in a read-only memory (ROM) 602 or a computer program loaded into a random-access memory (RAM) 603 from a storage unit 608. Various programs and data required for the operation of the device 600 may also be stored in the RAM 603. The computing unit 601, the ROM 602, and the RAM 603 are connected to each other via a bus 604. An input/output (I/O) interface 605 is also connected to the bus 604.

Multiple components in the device 600 are connected to the I/O interface 605. The multiple components include an input unit 606 such as a keyboard or a mouse, an output unit 607 such as various types of displays or speakers, the storage unit 608 such as a magnetic disk or an optical disc, and a communication unit 609 such as a network card, a modem or a wireless communication transceiver. The communication unit 609 allows the device 600 to exchange information/data with other devices over a computer network such as the Internet and/or over various telecommunication networks.

The computing unit 601 may be a general-purpose and/or special-purpose processing component having processing and computing capabilities. Examples of the computing unit 601 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 601 executes various preceding methods and processing, such as the resource control method for function computing. For example, in some embodiments, the resource control method for function computing may be implemented as a computer software program tangibly contained in a machine-readable medium such as the storage unit 608. In some embodiments, part or all of a computer program may be loaded and/or installed on the device 600 via the ROM 602 and/or the communication unit 609. When the computer program is loaded to the RAM 603 and executed by the computing unit 601, one or more steps of the preceding resource control method for function computing may be executed. Alternatively, in other embodiments, the computing unit 601 may be configured, in any other suitable manner (for example, by means of firmware), to perform the resource control method for function computing.

Herein various embodiments of the preceding systems and techniques may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

Program codes for implementation of the methods of the present disclosure may be written in one programming language or any combination of multiple programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may be executed entirely on a machine or may be executed partly on a machine. As a stand-alone software package, the program codes may be executed partly on a machine and partly on a remote machine or may be executed entirely on a remote machine or a server.

In the context of the present disclosure, the machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user; and a keyboard and a pointing apparatus (for example, a mouse or a trackball) through which the user can provide input for the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host, which is a host product in a cloud computing service system, so as to solve the defects of difficult management and weak traffic scalability in traditional physical hosts and VPS services. The server may also be a server of a distributed system, or a server combined with a blockchain.

Artificial intelligence is the study of making computers simulate certain human thinking processes and intelligent behaviors (such as learning, reasoning, thinking and planning), including technologies at both the hardware and software levels. Artificial intelligence hardware technologies generally include technologies such as sensors, special-purpose artificial intelligence chips, cloud computing, distributed storage and big data processing. Artificial intelligence software technologies mainly include several major technologies such as computer vision technologies, speech recognition technologies, natural language processing technologies, machine learning/deep learning technologies, big data processing technologies and knowledge mapping technologies.

Cloud computing refers to a technical system that accesses a flexible and scalable shared physical or virtual resource pool through a network, where resources may include servers, operating systems, networks, software, applications and storage devices, and may deploy and manage resources on demand in a self-service manner. Cloud computing can provide efficient and powerful data processing capabilities for artificial intelligence, the blockchain and other technical applications and model training.

It is to be understood that various forms of the preceding flows may be used with steps reordered, added, or removed. For example, the steps described in the present disclosure may be executed in parallel, in sequence, or in a different order as long as the desired result of the solutions provided in the present disclosure is achieved. The execution sequence of these steps is not limited herein.

The scope of the present disclosure is not limited to the preceding embodiments. It is to be understood by those skilled in the art that various modifications, combinations, subcombinations, and substitutions may be made according to design requirements and other factors.

## Claims

1. A resource control method for function computing, comprising:
in response to determining that a current time is a period node of a first period, performing (S101, 202) resource control on a dynamic pool; and
in response to determining that the current time is a period node of a second period, performing (S102, S203) resource control on a basic pool;
wherein the dynamic pool and the basic pool are obtained by dividing function computing resources according to different change periods, the second period is longer than the first period, and the resource control comprises capacity expansion or capacity reduction.

2. The method according to claim 1, wherein resources in the basic pool are more than resources in the dynamic pool.

3. The method according to claim 1, further comprising:
performing (S201) prediction on a resource quantity required by each time node in a current prediction time period according to a historical time series data of the function computing resources to obtain a prediction result, and taking the prediction result as one of bases for performing resource control on the dynamic pool or the basic pool;
wherein the current prediction time period is a time period from a current time t to a time t+a or a time period from the current time t to a time t+p, wherein α is the first period, and p is the second period.

4. The method according to claim 3, wherein the current prediction time period is the time period from the current time t to the time t+α; and the performing resource control on a dynamic pool comprises:
determining (S301) a maximum resource quantity prediction value and a minimum resource quantity prediction value in the current prediction time period according to the prediction result of the resource quantity required by each time node in the current prediction time period;
computing (S302) a maximum resource utilization rate prediction value in the current prediction time period according to the maximum resource quantity prediction value and a total function computing resource quantity of the current time;
in a case where the maximum resource utilization rate prediction value is greater than a preset maximum resource utilization rate threshold, performing (S303) capacity expansion on the dynamic pool; and
in a case where the maximum resource utilization rate prediction value is less than a preset minimum resource utilization rate threshold, performing (S304) capacity reduction on the dynamic pool.

5. The method according to claim 4, wherein the performing capacity expansion on the dynamic pool comprises:
calling an underlying resource request interface to acquire a quantity of resources required for capacity expansion, and adding the required quantity of resources to the dynamic pool;
wherein the quantity of resources required for the capacity expansion is obtained by subtracting the total function computing resource quantity of the current time from a ratio of the maximum resource quantity prediction value to the minimum resource utilization rate threshold.

6. The method according to claim 4, wherein the performing capacity reduction on the dynamic pool comprises:
computing a ratio of the maximum resource quantity prediction value to the maximum resource utilization rate threshold, and subtracting the total function computing resource quantity of the current time from the ratio to obtain a first target quantity of resources to be released for capacity reduction; and
releasing resources from the dynamic pool according to a preset priority and a current state of each resource in the dynamic pool until a quantity of released resources reaches the first target quantity or until the dynamic pool is emptied;
wherein the preset priority of each resource is a resource release order determined according to the current state of each resource.

7. The method according to claim 6, wherein the current state comprises:
a first state which is used for indicating that a resource in the first state is executing a task and enters a third state after the task is completed;
a second state which is used for indicating that a resource in the second state is in an idle state and is allowed to be reused by a specified function;
a third state which is used for indicating that a resource in the third state is in an idle but nonreusable state and enters the first state when the resource in the third state executes a task; and
a fourth state which is used for indicating that a resource in the fourth state is locked to executing a task but automatically released after the task is completed;
wherein resources in the dynamic pool with priorities in a descending order are: resources in the third state, resources in the second state, and resources in the first state.

8. The method according to claim 3, wherein the current prediction time period is the time period from the current time t to the time t+p; and accordingly, the performing resource control on a basic pool comprises:
acquiring (S401) a resource quantity prediction average value according to the prediction result of the resource quantity required by each time node in the current prediction time period;
computing (S402) a resource utilization rate prediction average value in the current prediction time period according to the resource quantity prediction average value and the total function computing resource quantity of the current time;
in a case where the resource utilization rate prediction average value is greater than the preset maximum resource utilization rate threshold, performing (S403) capacity reduction on the basic pool; and
in a case where the resource utilization rate prediction average value is less than the preset minimum resource utilization rate threshold, performing (S404) capacity reduction on the basic pool.

9. The method according to claim 8, wherein the performing capacity expansion on the basic pool comprises:
computing a ratio of the resource quantity prediction average value to the minimum resource utilization rate threshold, and subtracting the total function computing resource quantity of the current time from the ratio to obtain a second target quantity of resources required for capacity expansion;
in a case where a total quantity of resources in the dynamic pool is greater than the second target quantity, acquiring the second target quantity of resources from the dynamic pool, and migrating the second target quantity of resources into the basic pool; and
in a case where the total quantity of resources in the dynamic pool is less than the second target quantity, migrating all resources in the dynamic pool into the basic pool, calling an underlying resource request interface to acquire new resources, and putting the new resources into the basic pool until a quantity of migrated and put resources reaches the second target quantity.

10. The method according to claim 8, wherein the performing capacity reduction on the basic pool comprises:
computing a ratio of the resource quantity prediction average value to the maximum resource utilization rate threshold, and subtracting the total function computing resource quantity of the current time from the ratio to obtain a third target quantity of resources to be released for capacity reduction;
in a case where the total quantity of resources in the dynamic pool is greater than the third target quantity, releasing the third target quantity of resources from the dynamic pool; and
in a case where the total quantity of resources in the dynamic pool is less than the third target quantity, emptying resources in the dynamic pool, and releasing resources from the basic pool until a quantity of emptied and released resources reaches the third target quantity.

11. The method according to claim 7, further comprising:
in a case where a time at which any target resource completes an execution of a task has not reached a period node of the first period or a period node of the second period, labelling a state of the target resource as the second state.

12. The method according to claim 7, wherein the resources in the third state or the resources in the second state are stored in a form of an idle resource queue and a reusable resource queue, respectively, and a key value index of each resource in the third state and a key value index of each resource in the second state are stored for indicating a location of each resource in the queue; the resources in the first state and the resources in the fourth state are stored in a form of a collection.

13. The method according to claim 3, further comprising:
in response to determining that a quantity of current requests exceeds the prediction result and an exceeded part satisfies a preset condition, scheduling the current requests in the following manner:
preferentially executing synchronization requests in the current requests, and putting asynchronization requests in the current requests into a delay processing queue;
if current function computing resources cannot satisfy the synchronization requests, sequentially putting the synchronization requests into a synchronization queue according to a sequence of receiving the synchronization requests; and
after execution of the synchronization requests in the synchronization queue is completed, executing the asynchronization requests in the delay processing queue.

14. An electronic device, comprising:
at least one processor; and
a memory communicatively connected to the at least one processor;
wherein the memory stores instructions executable by the at least one processor, and the instructions are executed by the at least one processor to enable the at least one processor to perform the resource control method for function computing according to any one of claims 1 to 13.

15. A computer-readable storage medium storing computer instructions, wherein the computer instructions are used for enabling a computer to perform the resource control method for function computing according to any one of claims 1 to 13.
